# EUROPÄISCHE PATENTSCHRIFT

(11) **EP 3 464 882 B1**
(45) Veröffentlichungstag und Bekanntmachung des Hinweises auf die Patenterteilung: **19.10.2022**
(21) Anmeldenummer: 17725156.8
(22) Anmeldetag: 28.04.2017
(51) Int. Cl.: F03D 1/02, F03D 13/25, B63B 35/44, B63B 1/10

(54) **SCHWIMMENDE WINDENERGIEANLAGE MIT EINER MEHRZAHL VON ENERGIEWANDLUNGSEINHEITEN**
FLOATING WIND TURBINE HAVING A PLURALITY OF ENERGY CONVERSION UNITS
ÉOLIENNE FLOTTANTE MUNIE D'UNE PLURALITÉ D'UNITÉS DE CONVERSION D'ÉNERGIE

(30) Priorität: 03.06.2016 DE 102016110290
(43) Veröffentlichungstag der Anmeldung: 10.04.2019
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2017/100353
(87) Internationale Veröffentlichungsnummer: WO 2017/206976

(56) Entgegenhaltungen:
- WO-A1-2010/093253
- WO-A1-2013/074027
- DE-A1-102014 109 212
- FR-A1- 2 996 881

## Beschreibung

Die Erfindung betrifft eine schwimmende Windenergieanlage mit einer Mehrzahl von Energiewandlungseinheiten. Insbesondere betrifft die Erfindung eine schwimmende Windenergieanlage mit einem schwimmenden Fundament, einem auf dem schwimmenden Fundament angeordneten Turm, wenigstens zwei sich vom Turm erstreckenden Auslegern, jeweils einer am freien Ende jedes Auslegers angeordneten Energiewandlungseinheit, und einem das Fundament mit den Energiewandlungseinheiten und die Energiewandlungseinheiten untereinander verbindendem Seilsystem.

Offshore-Windenergieanlagen mit im Gewässergrund verankerten Gründungen sind bereits seit langem bekannt, wobei auch für diese bereits Konstruktionen mit einer Mehrzahl von Energiewandlungseinheiten vorgeschlagen worden sind; vgl. GB 2 443 886 A, DE 10 2012 020 052 B3.

Schwimmende Windenergieanlagen, die eine schwimmende Gründung, also ein schwimmendes Fundament aufweisen, zeigen üblicherweise einen Aufbau mit einem auf einem schwimmenden Fundament angeordneten Turm, der beispielsweise eine aus einem Rotor, einem Rotorlager, einem Getriebe und einem Generator bestehende Energiewandlungseinheit aufweist; vgl. GB 2 489 158 A, DE 10 2014 109 212 A1.

Als eher seltener Fall ist aus der WO 2014/060 420 A1 eine schwimmende Windenergieanlage mit zwei Rotoren bekannt, die auf einem als "ballasted SPAR" ausgebildeten schwimmenden Fundament aufgebracht sind. Die beiden Energiewandlungseinheiten sind dabei an den freien Enden zweier Ausleger angebracht, die auf dem SPAR montiert und über Abspannungen miteinander verbunden sind. Die Anlagen sind als Leeläufer ausgelegt und sollen sich gemeinsam selbständig in den Wind ausrichten. Dafür ist um den Spar ein Lager im Unterwasserbereich angeordnet, das bei den in Frage kommenden Anlagengrößen einen Durchmesser im Bereich von 8-10 m haben muss. Derartige Lager sind im Moment nicht vorhanden und wenn dann nur sehr arbeits- und kostenaufwändig herzustellen.

Ferner ist bereits jetzt schon abzusehen, dass das ganze strukturelle System aus SPAR-Floater und darüber angeordneten Windenergieanlagen zu heftigen und gedämpften Drehschwingungen neigen wird, da fast überhaupt keine Torsionssteifigkeit gegeben ist. Schließlich müssen die Ausleger, an deren Enden die beiden Turbinen befestigt sind, die Schublasten der Rotoren als Biegemomente in die SPAR-Struktur einleiten. Dieses wiederum erfordert einen hohen Materialeinsatz Weiterer Stand der Technik ist in FR2996881A1 offenbart.

Aufgabe der Erfindung ist es daher, eine mit wenig Material- und Arbeitsaufwand herzustellende schwimmende Windenergieanlage zu schaffen, die den durch den Wind und die Wellen auf die schwimmende Windenergieanlage einwirkenden Lasten standhält.

Diese Aufgabe wird erfindungsgemäß durch die schwimmende Windenergieanlage mit den Merkmalen von Anspruch 1 gelöst. Die Unteransprüche geben vorteilhafte Ausgestaltungen der Erfindung wieder.

Im Gegensatz zu der aus der WO 2014/060 420 A1 bekannten Anlage wird bei der schwimmenden Windenergieanlage nach der Erfindung die als Halbtaucher ausgebildete Schwimmstruktur nicht nur an einer Stelle ins Wasser eintauchen, sondern an räumlich in einer Ebene verteilten Punkten. Dieses führt dazu, das die Schwimmstabilität wesentlich grösser und der Tiefgang wesentlich geringer sind und die gesamte Struktur aufgrund ihrer räumlichen horizontalen Ausdehnung eine Torsionssteifigkeit auf weist und damit stabil im Wasser den Windrichtungsänderungen nachgeführt werden kann.

Insbesondere wird gemäß einer bevorzugten Ausgestaltung der Windenergieanlage nach der Erfindung eine Y-Struktur im Unterwasserbereich eingesetzt an deren drei Enden drei Auftriebskörper ("*Floater*") angeordnet sind. An den oberen Enden dieser Floater außerhalb der Wasserzone, werden die Abspannungen des Seilsystems an die Energiewandlungseinheiten geführt. Zwischen den beiden Energiewandlungseinheiten befindet sich eine zusätzliche Abspannung, die die Gewichtlasten der beiden Energiewandlungseinheiten aufnimmt. Die beiden Abspannungen von den beiden Anlagen zum Luv-seitig angeordneten Floater dienen dazu die Schublasten, die von den Rotoren erzeugt werden, aufzunehmen und in die Floater- und Y-Struktur einzuleiten. Die beiden Ausleger die die Energiewandlungseinheiten an den jeweiligen Enden tragen, werden dabei nur wenig durch Biegemomente beansprucht.

Die unterhalb der beiden Energiewandlungseinheiten angeordneten Abspannungen haben die Aufgabe, den Rückwärtsschub beim Abbremsen der Anlage aufzunehmen und in die Leeseitig angeordneten Floater einzuleiten. Das Seilsystem ist so hoch vorgespannt, das bei keinem anzunehmenden Lastfall ein Seil entlastet wird und keine Vorspannung mehr aufweist.

Die Floater sind vorzugsweise in der Neigung der einzelnen Abspannungen angeordnet. So ist der Luv-Floater von der Seite gesehen zum Turm hin geneigt im Winkel der Luv-Abspannungen.

Die Lee-Floater sind ebenfalls zum Turm hingeneigt im Winkel der Lee-Abspannungen. Die Vorspannung der jeweils an jeder Energiewandlungseinheit angelenkten Abspannungen wird so eingestellt, dass die resultierende Kraft aus allen Vorspannungen genau in der Achse der Ausleger wirkt. Diese Ausgestaltung führt dazu, dass keine Biegemomente in die Auslegerstruktur eingeleitet werden, sondern nur Druckkräfte.

Die Position der Anlenkpunkte der an der Anlage zusammenlaufenden Abspannungen ist so zu wählen, dass auf möglichst kurzen Abständen geringe Strukturbelastungen erzeugt werden. Vorteilhaft ist es dabei, die Abspannseile auf einem Punkt zusammen laufen zu lassen.

Durch die Schrägstellung der Floater kommt es zusätzlich zu einem vorteilhaften Lastübertragungsverhalten. Die Wellenlasten einerseits zusammen mit den Lasten der Abspannungen werden nämlich (teilweise) durch die Auftriebskräfte am Floater kompensiert, sodass das Y-Fundament geringer belastet wird und weniger stark dimensioniert werden muss. Ferner kann durch die gezielte Flutung der Y-Fundamentkammern das Biegemoment im Y-Fundament weiter verringert werden.

Erfindungsgemäß ist also eine Windenergieanlage vorgesehen, die ein als Halbtaucher ausgebildetes schwimmendes Fundament, einen auf dem schwimmenden Fundament angeordneten Turm, wenigstens zwei sich vom Turm erstreckende Auslegern, jeweils eine am freien Ende jedes Auslegers angeordnete Energiewandlungseinheit, und ein das Fundament mit den Energiewandlungseinheiten und die Energiewandlungseinheiten untereinander verbindendes Seilsystem aufweist, wobei das Seilsystem eine Vorspannung besitzt, deren Betrag größer als im Betrieb der Windenergieanlage zu erwartende, der Vorspannung entgegenwirkende Lasten ist.

Das Seilsystem ist speziell so ausgebildet, dass auf den Turm, die Ausleger und die Energiewandlungseinheiten wirkenden Schubkräfte über die vorgespannten Seile in das Fundament geleitet werden. Die Vorspannung muss daher so groß sein, dass kein Seil zu irgendeinem Zeitpunkt erschlaffen kann.

Das Seilsystem kann grundsätzlich aus einem einzigen Seil bestehen. Bevorzugt besteht das Seilsystem jedoch aus einer Mehrzahl von Seilen.

Nach einer bevorzugten Ausgestaltung liegt der sich aus der Vorspannung des Seilsystems ergebende Kraftvektor bei Verwendung der Windenergieanlage im zeitlichen Mittel in der Achse der Ausleger.

Bevorzugt ist das schwimmende Fundament als Y-förmige Plattform mit einem langen Arm und zwei kurzen Armen ausgebildet ist, wobei der Turm im Verbindungspunkt der drei Arme angeordnet ist.

Besonders bevorzugt ist die Windenergieanlage dabei als Lee-Läufer ausgebildet und der Turm nach Lee geneigt.

Eine weitere vorteilhafte Ausgestaltung wird erreicht, wenn wenigstens zwei Energiewandlungseinheiten oberhalb des freien Endes der kurzen Arme angeordnet sind.

Das Seilsystem ist insbesondere derart ausgebildet, dass dieses am freien Ende des langen Arms und/oder an den freien Enden der kurzen Arme angelenkt ist.

Alternativ ist das Seilsystem nur am freien Ende des langen Arms angelenkt, wobei die Energiewandlungseinheiten zusätzlich mittels Stützen mit den freien Enden der kurzen Arme verbunden sind.

Speziell weist das schwimmende Fundament an den freien Enden seiner Arme auf seiner dem Turm zugewandten Seite jeweils einen fest mit dem Fundament verbundenen Auftriebskörper auf. Diese Auftriebskörper sind besonders bevorzugt derart angeordnet, dass die Längsachse jedes Auftriebskörpers in wenigstens einer Ebene auf eine Energiewandlungseinheit ausgerichtet ist.

Nach einer besonders bevorzugten Ausgestaltung ist auch vorgesehen, dass die schwimmende Windenergieanlage mit zwei Energiewandlungseinheiten mit jeweils einem Zweiblatt-Rotor ausgestattet ist, wobei die Längsachse der Rotorblätter der beiden Energiewandlungseinheiten zueinander im Betrieb mit einer Phasenverschiebung von 90° geregelt werden.

Speziell ist bei einer Ausgestaltung mit zwei Energiewandlungseinheiten mit jeweils einem Rotor mit wenigstens einem Rotorblatt der Drehsinn der beiden Rotoren gegensinnig ausgelegt, sodass die Kreiselkräfte auf die Gesamtstruktur ausgeglichen sind.

Wird die Anlage jedoch gebremst und die Rotoren in die Parkstellung verbracht sind die Rotorblätter in der Parkstellung identisch, speziell horizontal ausgerichtet.

Der Vorteil der Erfindung liegt unter anderem auch darin, dass eine Offshore-Windenergieanlage bereit gestellt werden kann, deren Gesamtleistung sich aus mehreren Einzelanlagen zusammensetzt. Insbesondere kommen für die technische Realisierung einer solchen erfindungsgemäßen Windenergieanlage gängige Anlagen mittlerer Leistung zum Einsatz, die bereits erprobt sind und in Serie kostengünstig gebaut werden, sodass auf Einzelanlagen geringerer Leistung zurückgegriffen werden kann, die auch bereits eine entsprechende Zulassung aufweisen. Dadurch wird der Arbeits- und Zeitaufwand zur Erstellung der erfindungsgemäßen Windenergieanlage erheblich verringert.

Die Erfindung wird im Folgenden anhand von in den beigefügten Zeichnungen dargestellten, besonders bevorzugt ausgestalteten Ausführungsbeispielen näher erläutert. Es zeigen:
- Fig. 1: ein erstes Ausführungsbeispiel einer besonders bevorzugt ausgestalteten Windenergieanlage nach der Erfindung in einer perspektivischen Ansicht von Luv;
- Fig. 2: die Windenergieanlage gemäß erstem Ausführungsbeispiel in einer perspektivischen Ansicht von Lee;
- Fig. 3: die Windenergieanlage gemäß erstem Ausführungsbeispiel in einer Seitenansicht;
- Fig. 4: die Windenergieanlage gemäß erstem Ausführungsbeispiel in einer Frontalansicht von Lee;
- Fig. 5: die Windenergieanlage gemäß erstem Ausführungsbeispiel in einer Draufsicht;
- Fig. 6: ein zweites Ausführungsbeispiel einer besonders bevorzugt ausgestalteten Windenergieanlage nach der Erfindung in einer perspektivischen Ansicht von Luv;
- Fig. 7: die Windenergieanlage gemäß zweitem Ausführungsbeispiel in einer perspektivischen Ansicht von Lee;
- Fig. 8: die Windenergieanlage gemäß zweitem Ausführungsbeispiel in einer Seitenansicht;
- Fig. 9: die Windenergieanlage gemäß zweitem Ausführungsbeispiel in einer Frontalansicht von Lee;
- Fig. 10: die Windenergieanlage gemäß zweitem Ausführungsbeispiel in einer Draufsicht;
- Fig. 11: ein drittes Ausführungsbeispiel einer besonders bevorzugt ausgestalteten Windenergieanlage nach der Erfindung in einer perspektivischen Ansicht von Luv;
- Fig. 12: die Windenergieanlage gemäß drittem Ausführungsbeispiel in einer perspektivischen Ansicht von Lee;
- Fig. 13: die Windenergieanlage gemäß drittem Ausführungsbeispiel in einer Seitenansicht;
- Fig. 14: die Windenergieanlage gemäß drittem Ausführungsbeispiel in einer Frontalansicht von Lee; und
- Fig. 15: die Windenergieanlage gemäß drittem Ausführungsbeispiel in einer Draufsicht.

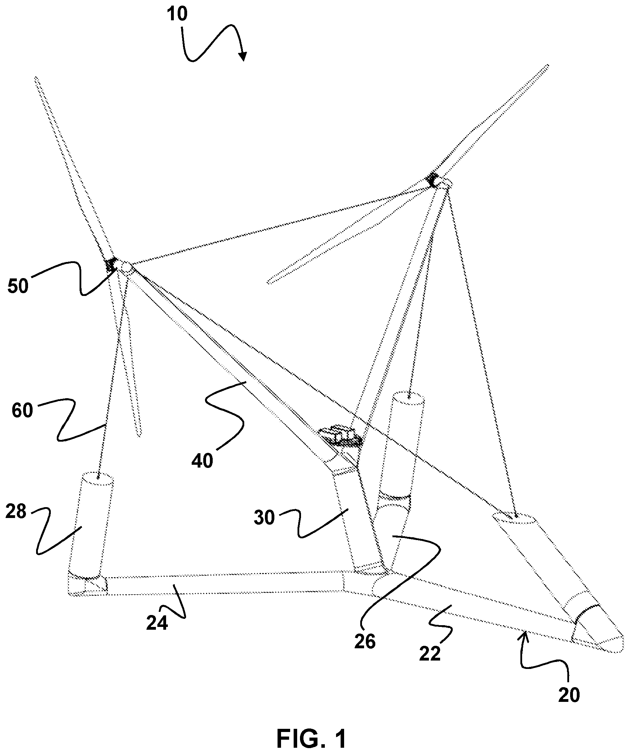

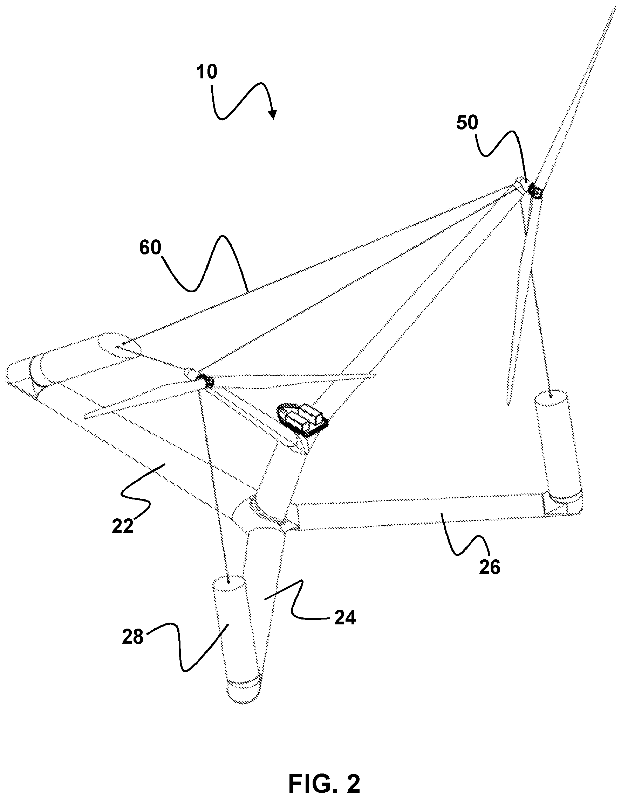

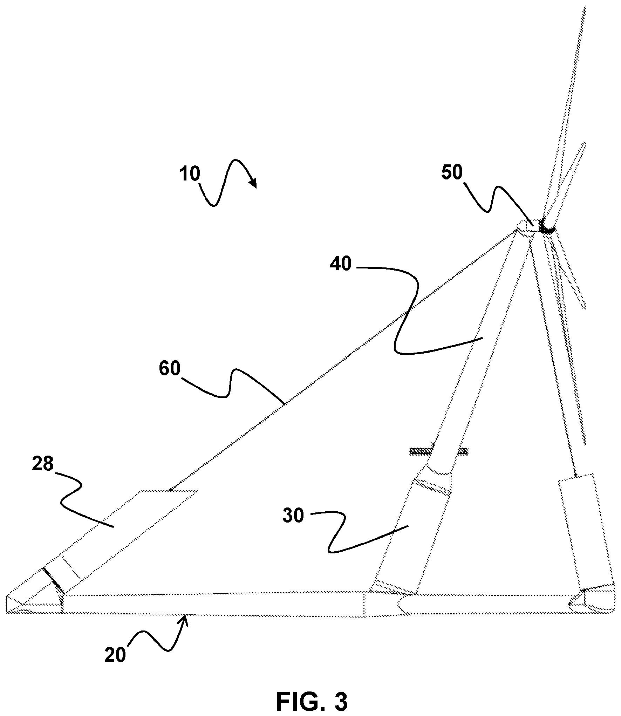

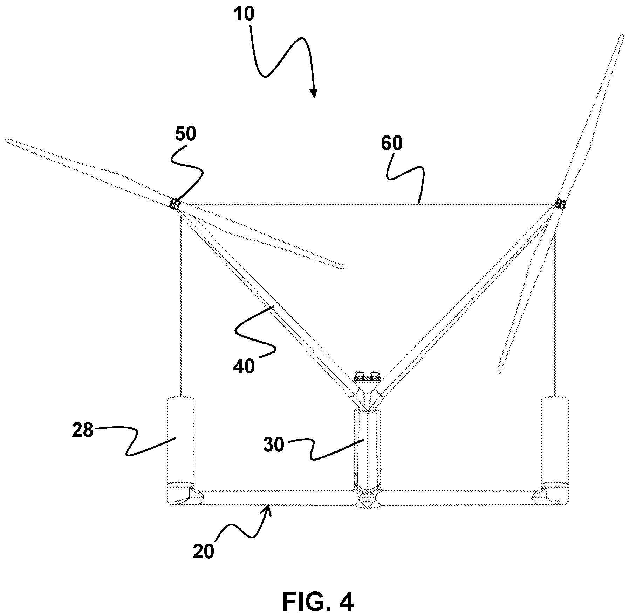

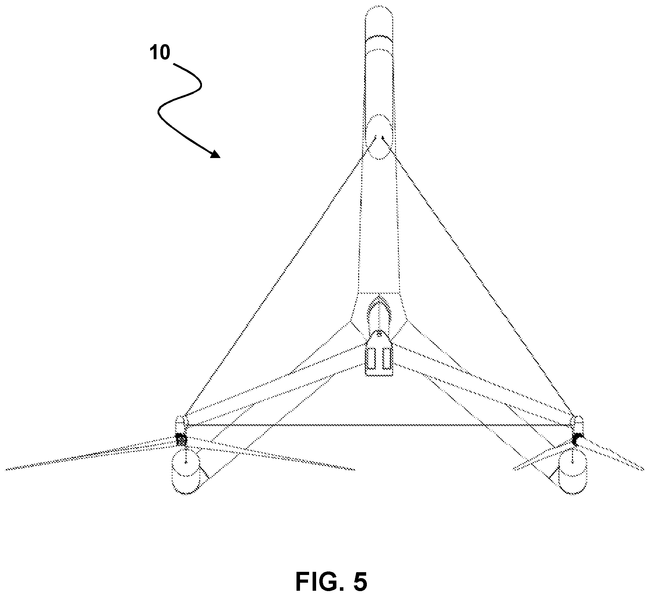

Fig. 1 zeigt ein erstes Ausführungsbeispiel einer besonders bevorzugt ausgestalteten Windenergieanlage nach der Erfindung in einer perspektivischen Ansicht von Luv. Die sich daran anschließenden Abbildungen Fig. 2 bis 5 zeigen dieselbe Windenergieanlage in den weiteren oben genannten Ansichten.

Die dargestellte Windenergieanlage 10 weist ein als Halbtaucher ausgebildetes schwimmenden Fundament 20 auf, mit einem auf dem schwimmenden Fundament 20 angeordneten Turm 30 und zwei sich vom Turm 30 erstreckenden Auslegern 40. Jeweils am freien Ende jedes Auslegers 40ist eine Energiewandlungseinheit 50 angeordnet, wobei schließlich ein das Fundament 20 mit den Energiewandlungseinheiten 50 und die Energiewandlungseinheiten 50 untereinander verbindendes, aus einer Mehrzahl von Seilen gebildetes Seilsystem 60 zur Einleitung der auf den Turm 30, die Ausleger 40 und die Energiewandlungseinheiten 50 wirkenden Schubkräfte in das Fundament 20 vorgesehen ist und das Seilsystem 60 eine Vorspannung aufweist, deren Betrag größer als im Betrieb der Windenergieanlage 10 zu erwartende, der Vorspannung entgegenwirkende Lasten ist. Insbesondere ist das Seilsystem 60 so ausgestaltet, dass der aus der Vorspannung des Seilsystems 60 ergebende Kraftvektor bei Verwendung der Windenergieanlage 10 im zeitlichen Mittel in der Achse der Ausleger 40 liegt.

Das schwimmende Fundament 20 ist als Y-förmige Plattform mit einem langen Arm 22 und zwei kurzen Armen 24, 26 ausgebildet, wobei der Turm 30 im Verbindungspunkt der drei Arme 22, 24, 26 angeordnet ist.

Der Turm 30 kann als Auftriebskörper 28 ("Floater") ausgebildet sein.

Das Seilsystem 60 kann unmittelbar am Fundament 20 angeschlagen oder mittelbar mit dem Fundament 20 dadurch verbunden sein, das das Seilsystem 60 mit den an den freien Enden des Fundaments 20 angeordneten Auftriebskörpern 28 verbunden ist.

Die Abbildungen zeigen, dass die Windenergieanlage 10 als Lee-Läufer ausgebildet und der Turm 30 nach Lee geneigt ist. Dadurch ergibt sich die Möglichkeit die Energiewandlungseinheiten 50 so anzuordnen, dass die Energiewandlungseinheiten 50 jeweils oberhalb des freien Endes eines kurzen Arms 24, 26 angeordnet sind.

Wie die Ansichten deutlich zeigen ist die Längsachse jedes Auftriebskörpers 28 in wenigstens einer Ebene auf eine Energiewandlungseinheit 50 ausgerichtet, sodass sich eine optimale Krafteinleitung in die Strukturen der Windenergieanlage 10 ergibt.

Die Windenergieanlage 10 ist so ausgebildet, dass der Drehsinn der beiden Rotoren der Energiewandlungseinheiten 50 gegensinnig ist. Diese Ausgestaltung wirkt sich insgesamt positiv auf das dynamische Verhalten der schwimmenden Windenergieanlage 10 aus, da die Kreiselkräfte kompensiert werden.

Speziell sind die Rotorblätter im Betrieb zueinander phasenverschoben ausgerichtet - im dargestellten Ausführungsbeispiel sind die Blätter der Energiewandlungseinheiten 50 also zueinander um 90° phasenverschoben angeordnet.

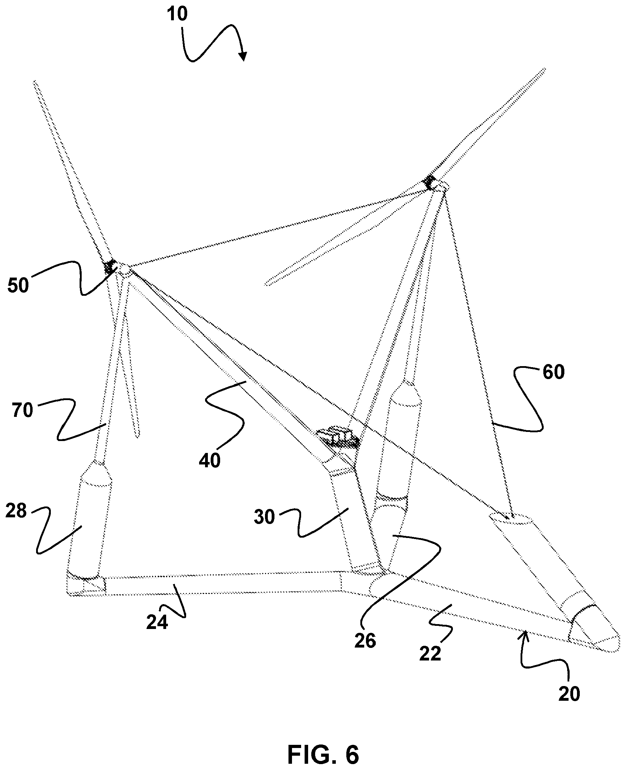

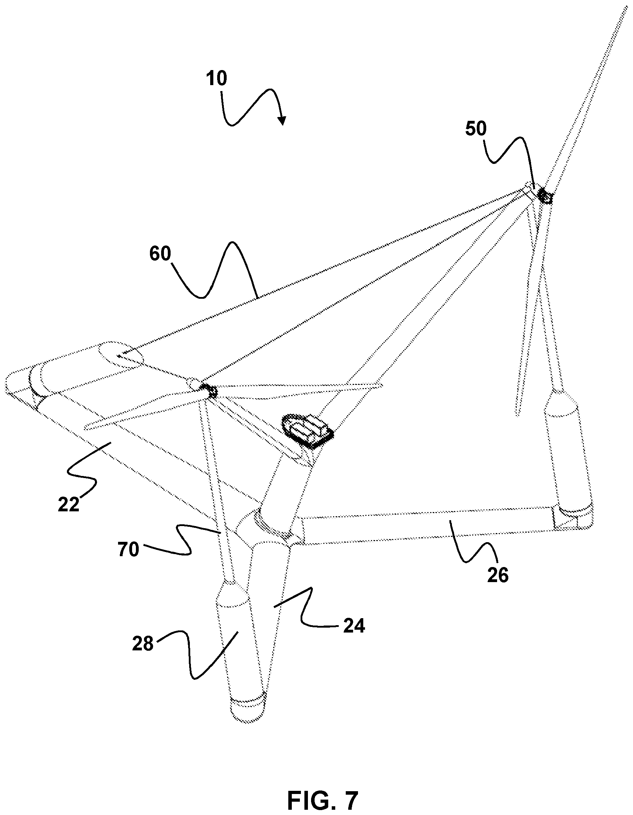

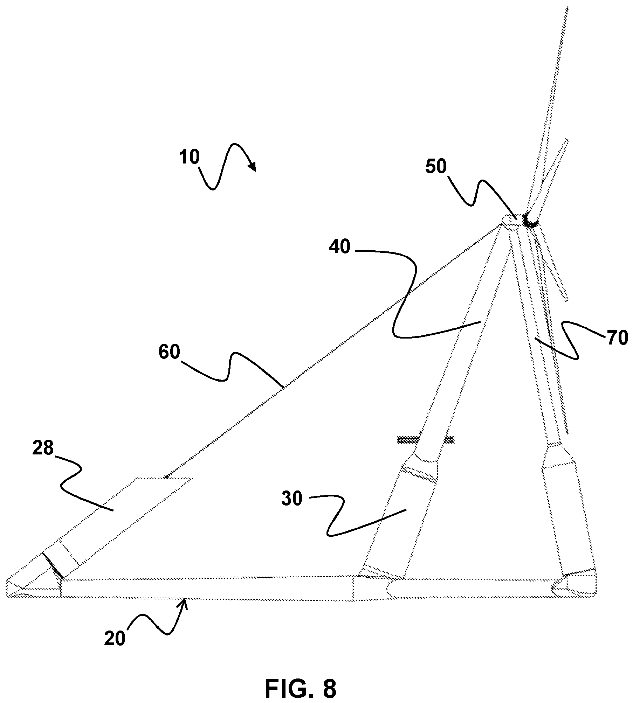

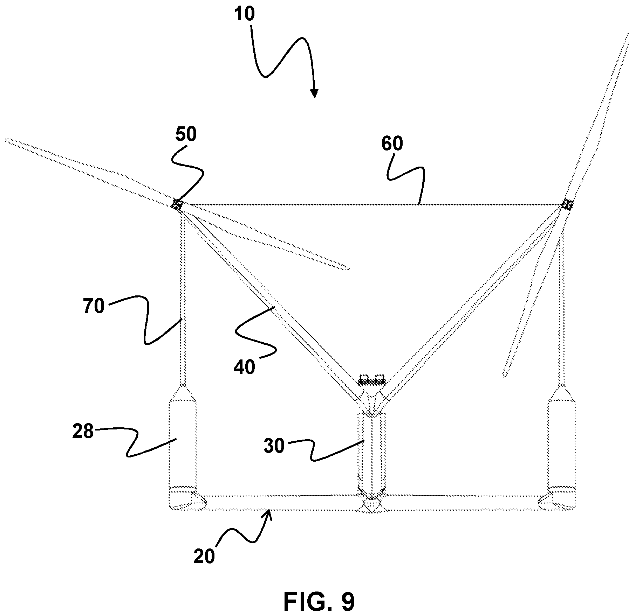

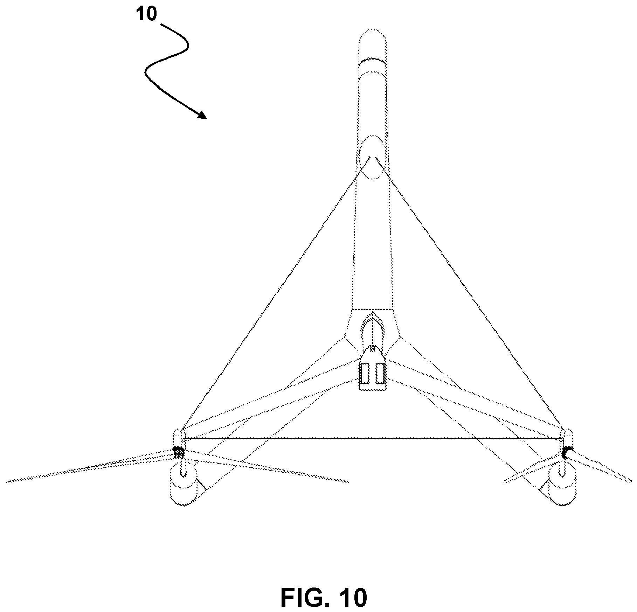

Fig. 6 zeigt ein zweites Ausführungsbeispiel einer besonders bevorzugt ausgestalteten Windenergieanlage nach der Erfindung in einer perspektivischen Ansicht von Luv. Die sich daran anschließenden Abbildungen Fig. 7 bis 10 zeigen dieselbe Windenergieanlage in den weiteren oben genannten Ansichten.

Das zweite Ausführungsbeispiel unterscheidet sich von dem in den Fig. 1 bis 5 gezeigten Ausführungsbeispiel dadurch, dass das Seilsystem am freien Ende des langen Arms 22 des Fundaments 20 angelenkt ist und die Energiewandlungseinheiten 50 mittels Stützen 70 mit den freien Enden der kurzen Arme 24, 26 verbunden sind.

Im zweiten Ausführungsbeispiel sind die die Energiewandlungseinheiten 50 mit den freien Enden der kurzen Arme 24, 26 verbindenden Seile 60 also durch Stützen 70 ersetzt, die insbesondere in Bezug auf deren Längsachse inkompressibel und torsionssteif sind.

Diese Ausgestaltung unterstützt die Einleitung der auf die Energiewandlungseinheiten 50 wirkenden Schubkräfte in das Fundament 20, bedeutet jedoch im Verhältnis zum ersten Ausführungsbeispiel einen erhöhten Materialbedarf. Dieser erhöhte Materialbedarf ist aber in Abhängigkeit von den in bestimmten Regionen auftretenden Windlasten durchaus gerechtfertigt, wobei das Seilsystem 60, das den langen Arm 22 des Fundaments 20 mit den Energiewandlungseinheiten 50 und die Energiewandlungseinheiten 50 miteinander verbindet, weiterhin die erfindungsgemäßen Vorteile aufweist.

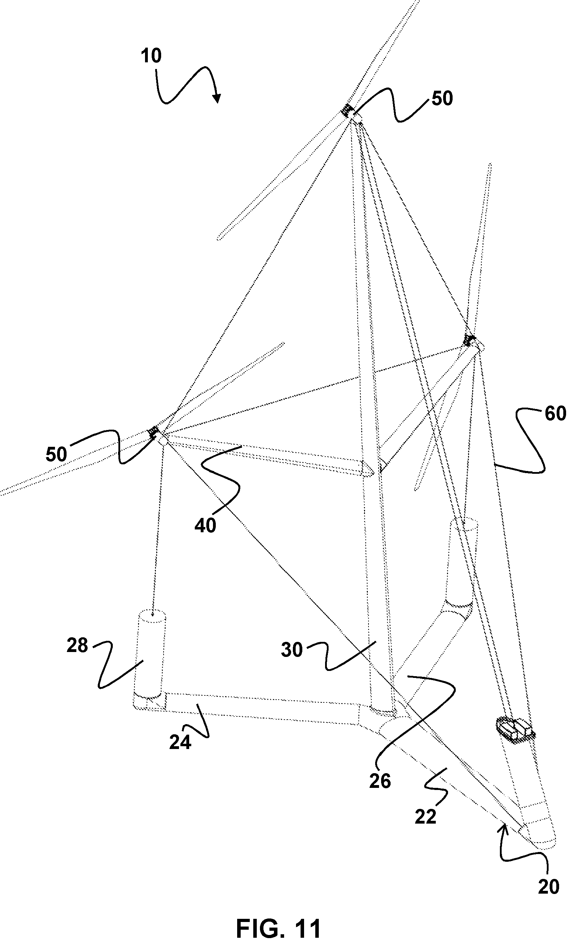

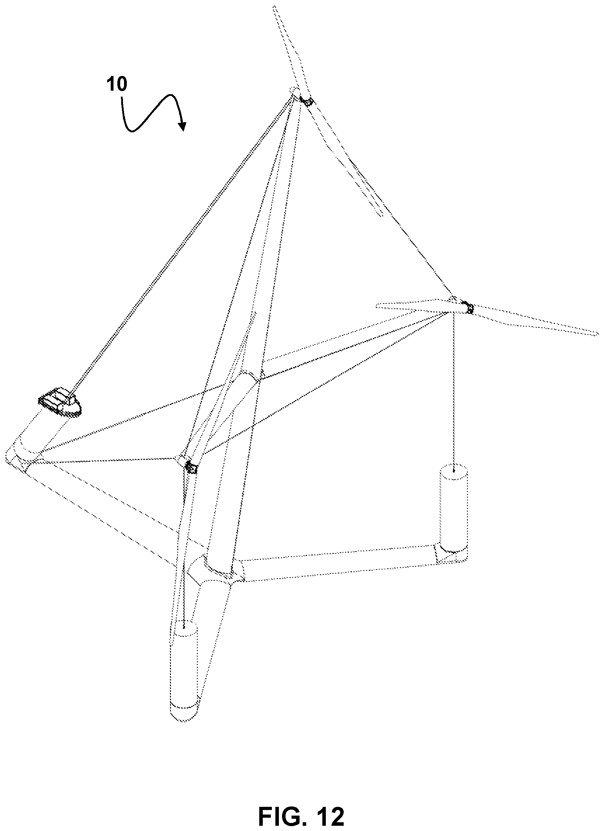

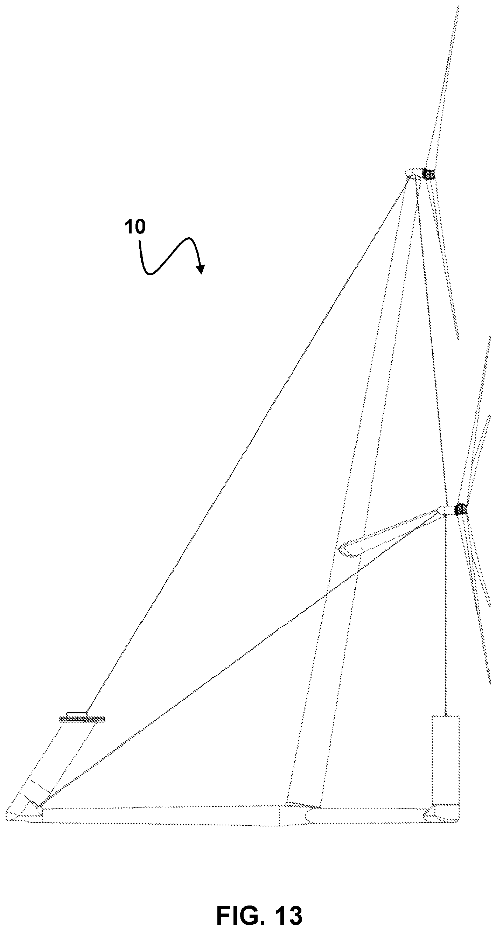

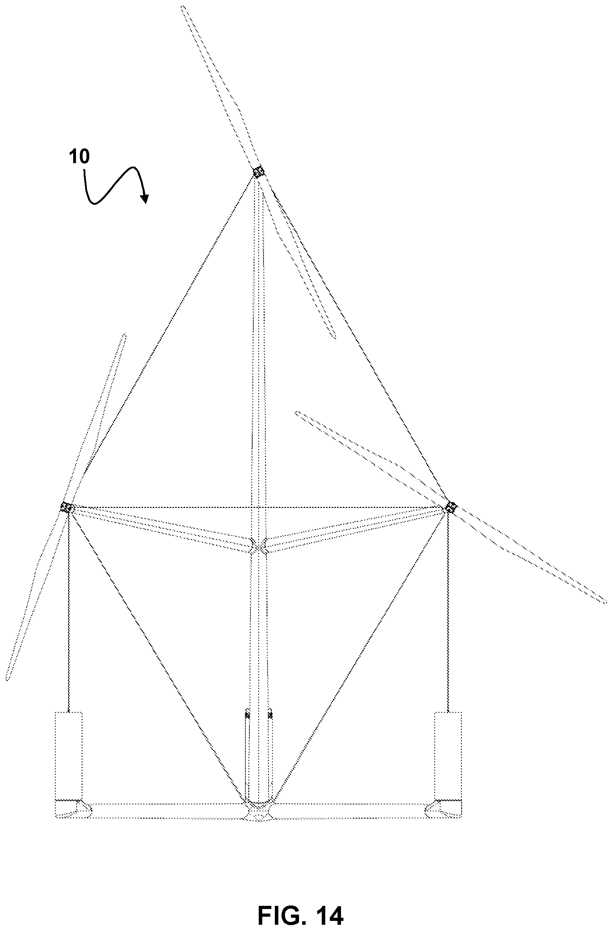

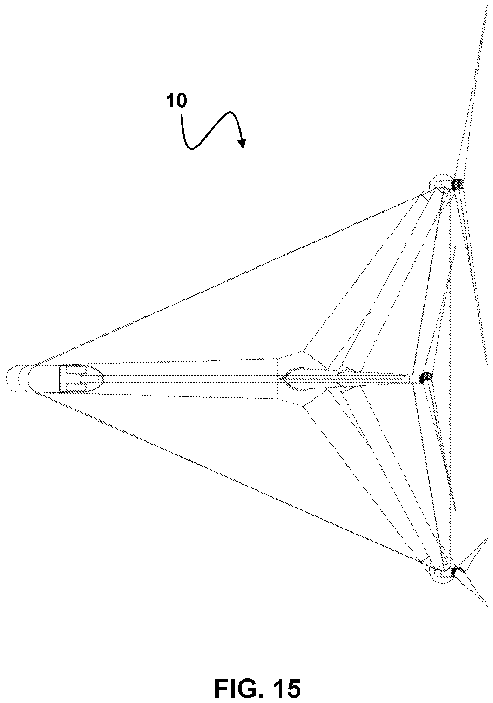

Fig. 11 zeigt schließlich ein drittes Ausführungsbeispiel einer besonders bevorzugt ausgestalteten Windenergieanlage nach der Erfindung in einer perspektivischen Ansicht von Luv. Die sich daran anschließenden Abbildungen Fig. 12 bis 15 zeigen dieselbe Windenergieanlage in den weiteren oben genannten Ansichten.

Im Unterschied zu dem in den Fig. 1 bis 5 dargestellten Ausführungsbeispiel sind nicht nur zwei Energiewandlungseinheiten 50, sondern drei Energiewandlungseinheiten vorgesehen. Dabei ist der Turm 30 über den Ansatzpunkt der beiden Ausleger 40 hinaus verlängert und trägt an seinem Ende eine weitere Energiewandlungseinheit 50.

Diese auf dem Turm 30 angeordnete dritte Energiewandlungseinheit 50 ist bevorzugt mit den anderen beiden Energiewandlungseinheiten 50 identisch ausgebildet. Alternativ kann die dritte Energiewandlungseinheit 50 aber auch beispielsweise mit einem 3-Blatt-Rotor ausgestaltet sein, wobei die an den Auslegern 40 angeordneten Energiewandlungseinheiten mit einem 2-Blatt-Rotor ausgestattet sind.

Das Seilsystem 60 dieses Ausführungsbeispiels ist jedenfalls insofern komplexer ausgestaltet, dass das Fundament 20 mit jeder Energiewandlungseinheit 50 und die Energiewandlungseinheiten 50 untereinander mittels Seilen 60 verspannt ist.

## Patentansprüche

1. Windenergieanlage (10) mit
- einem als Halbtaucher ausgebildeten schwimmenden Fundament (20),
- einem auf dem schwimmenden Fundament (20) angeordneten Turm (30),
- wenigstens zwei sich vom Turm (30) erstreckenden Auslegern (40),
- jeweils einer am freien Ende jedes Auslegers (40) angeordneten Energiewandlungseinheit (50), **gekennzeichnet durch**
- ein das Fundament (20) mit den Energiewandlungseinheiten (50) und die Energiewandlungseinheiten (50) untereinander verbindendes Seilsystem (60) zur Einleitung der auf den Turm (30), die Ausleger (40) und die Energiewandlungseinheiten (50) wirkenden Schubkräfte in das Fundament (20), wobei das Seilsystem (60) eine Vorspannung aufweist, deren Betrag größer als im Betrieb der Windenergieanlage (10) zu erwartende, der Vorspannung entgegenwirkende Lasten ist.

2. Windenergieanlage (10) nach Anspruch 1, **dadurch gekennzeichnet, dass** der sich aus der Vorspannung des Seilsystems (60) ergebende Kraftvektor bei Verwendung der Windenergieanlage (10) im zeitlichen Mittel in der Achse der Ausleger (40) liegt.

3. Windenergieanlage (10) nach einem der vorhergehenden Ansprüche, **dadurch gekennzeichnet, dass** das schwimmende Fundament (20) als Y-förmige Plattform mit einem langen Arm (22) und zwei kurzen Armen (24, 26) ausgebildet ist, wobei der Turm (30) im Verbindungspunkt der drei Arme (22, 24, 26) angeordnet ist.

4. Windenergieanlage (10) nach Anspruch 3, **dadurch gekennzeichnet, dass** die Windenergieanlage (10) als Lee-Läufer ausgebildet und der Turm (30) nach Lee geneigt ist.

5. Windenergieanlage (10) nach einem der Ansprüche 3 und 4, **dadurch gekennzeichnet, dass** wenigstens zwei Energiewandlungseinheiten (50) oberhalb des freien Endes der kurzen Arme (24, 26) angeordnet sind.

6. Windenergieanlage (10) nach einem der Ansprüche 3 bis 5, **dadurch gekennzeichnet, dass** das Seilsystem am freien Ende des langen Arms (22) und/oder an den freien Enden der kurzen Arme (24, 26) angelenkt ist.

7. Windenergieanlage (10) nach einem der Ansprüche 3 bis 5, **dadurch gekennzeichnet, dass** das Seilsystem am freien Ende des langen Arms (22) angelenkt ist und die Energiewandlungseinheiten (50) mittels Stützen (70) mit den freien Enden der kurzen Arme (24, 26) verbunden sind.

8. Windenergieanlage (10) nach einem der Ansprüche 3 bis 7, **dadurch gekennzeichnet, dass** das schwimmende Fundament (20) an den freien Enden seiner Arme (22, 24, 26) auf seiner dem Turm (30) zugewandten Seite jeweils einen fest mit dem Fundament (20) verbundenen Auftriebskörper (28) aufweist.

9. Windenergieanlage (10) nach Anspruch 8, **dadurch gekennzeichnet, dass** die Längsachse jedes Auftriebskörpers (28) in wenigstens einer Ebene auf eine Energiewandlungseinheit (50) ausgerichtet ist.

10. Windenergieanlage (10) nach einem der vorhergehenden Ansprüche, **gekennzeichnet durch** zwei Energiewandlungseinheiten (50) mit jeweils einem Rotor mit wenigstens einem Rotorblatt, wobei der Drehsinn der beiden Rotoren gegensinnig ist.

11. Windenergieanlage (10) nach einem der vorhergehenden Ansprüche, **gekennzeichnet durch** zwei Energiewandlungseinheiten (50) mit jeweils einem Rotor mit wenigstens einem Rotorblatt, wobei die Rotorblätter im Betrieb zueinander phasenverschoben geregelt sind.

12. Windenergieanlage (10) nach einem der vorhergehenden Ansprüche, **gekennzeichnet durch** zwei Energiewandlungseinheiten (50) mit jeweils einem Rotor mit wenigstens einem Rotorblatt, wobei die Rotorblätter in der Parkstellung identisch ausgerichtet sind.

## Claims

1. A wind turbine (10), comprising
- a floating base (20) designed as a semi-submersible,
- a tower (30) arranged on the floating base (20),
- at least two booms (40) extending from the tower (30),
- one energy conversion unit (50) arranged at the free end of each boom (40),
**characterized by**
- a cable system (60) connecting the base (20) to the energy conversion units (50) and the energy conversion units (50) to each other in order to introduce the thrust forces acting on the tower (30), the booms (40) and the energy conversion units (50) into the base (20), wherein the cable system (60) has a pretensioning, the value of which is greater than loads acting against the pretensioning that are to be expected during the operation of the wind turbine (10).

2. The wind turbine (10) according to claim 1, **characterized in that** the force vector resulting from the pretensioning of the cable system (60) during the use of the wind turbine (10), in the average over time, lies in the axis of the booms (40).

3. The wind turbine (10) according to any of the preceding claims, **characterized in that** the floating base (20) is designed as a Y-shaped platform with a long arm (22) and two short arms (24, 26), wherein the tower (30) is arranged in the connection point of the three arms (22, 24, 26).

4. The wind turbine (10) according to claim 3, **characterized in that** the wind turbine (10) is designed as a downwind machine and the tower (30) is inclined downwind.

5. The wind turbine (10) according to any of claims 3 and 4,
**characterized in that** at least two energy conversion units (50) are arranged above the free end of the short arms (24, 26).

6. The wind turbine (10) according to any of claims 3 to 5,
**characterized in that** the cable system is attached at the free end of the long arm (22) and/or at the free ends of the short arms (24, 26).

7. The wind turbine (10) according to any of claims 3 to 5,
**characterized in that** the cable system is attached at the free end of the long arm (22), and the energy conversion units (50) are connected to the free ends of the short arms (24, 26) by supports (70).

8. The wind turbine (10) according to any of claims 3 to 7,
**characterized in that** the floating base (20) has a buoyancy body (28), which is fixedly connected to the base (20), at the free ends of each of its arms (22, 24, 26) on its side that faces the tower (30).

9. The wind turbine (10) according to claim 8, **characterized in that** the longitudinal axis of each buoyancy body (28) is aligned in at least one plane with an energy conversion unit (50).

10. The wind turbine (10) according to any of the preceding claims, **characterized by** two energy conversion units (50), each having a rotor with at least one rotor blade, wherein the direction of rotation of the two rotors is opposite.

11. The wind turbine (10) according to any of the preceding claims, **characterized by** two energy conversion units (50), each having a rotor with at least one rotor blade, wherein the rotor blades are regulated with a phase shift in relation to one another during operation.

12. The wind turbine (10) according to any of the preceding claims, **characterized by** two energy conversion units (50), each having a rotor with at least one rotor blade, wherein the rotor blades are aligned identically in the parked position.

## Revendications

1. Éolienne (10) comportant
- une fondation (20) flottante réalisée sous la forme d'un semi-submersible,
- une tour (30) disposée sur la fondation (20) flottante,
- au moins deux flèches (40) s'étendant à partir de la tour (30),
- respectivement une unité de conversion de puissance (50) disposée au niveau de l'extrémité libre de chaque flèche (40),
**caractérisée par**
- un système de cordes (60) reliant la fondation (20) aux unités de conversion de puissance (50) et les unités de conversion de puissance (50) entre elles pour l'introduction des forces de poussée agissant sur la tour (30), les flèches (40) et les unités de conversion de puissance (50) dans la fondation (20), le système de cordes (60) présentant une précontrainte, dont la valeur est supérieure aux charges opposées à la précontrainte à attendre lors du fonctionnement de l'éolienne (10).

2. Éolienne (10) selon la revendication 1, **caractérisée en ce que** le vecteur de force résultant de la précontrainte du système de cordes (60) se situe en moyenne temporelle dans l'axe des flèches (40) lors de l'utilisation de l'éolienne (10).

3. Éolienne (10) selon l'une des revendications précédentes,
**caractérisée en ce que** la fondation (20) flottante est réalisée en tant que plateforme en forme d'Y comportant un bras long (22) et deux bras courts (24, 26), la tour (30) étant disposée au point de liaison des trois bras (22, 24, 26).

4. Éolienne (10) selon la revendication 3, **caractérisée en ce que** l'éolienne (10) est réalisée montée sous le vent et la tour (30) est inclinée du côté sous le vent.

5. Éolienne (10) selon l'une des revendications 3 et 4, **caractérisée en ce qu'**au moins deux unités de conversion de puissance (50) sont disposées au-dessus de l'extrémité libre des bras courts (24, 26).

6. Éolienne (10) selon l'une des revendications 3 à 5, **caractérisée en ce que** le système de cordes est articulé au niveau de l'extrémité libre du bras long (22) et/ou au niveau des extrémités libres des bras courts (24, 26).

7. Éolienne (10) selon l'une des revendications 3 à 5, **caractérisée en ce que** le système de cordes est articulé au niveau de l'extrémité libre du bras long (22) et les unités de conversion de puissance (50) sont reliées aux extrémités libres des bras courts (24, 26) au moyen de supports (70).

8. Éolienne (10) selon l'une des revendications 3 à 7, **caractérisée en ce que** la fondation (20) flottante présente, sur son côté faisant face à la tour (30), au niveau des extrémités libres de ses bras (22, 24, 26), respectivement un flotteur (28) relié de manière fixe à la fondation (20).

9. Éolienne (10) selon la revendication 8, **caractérisée en ce que** l'axe longitudinal de chaque flotteur (28) est orienté dans au moins un plan vers une unité de conversion de puissance (50).

10. Éolienne (10) selon l'une des revendications précédentes, **caractérisée par** deux unités de conversion de puissance (50) comportant respectivement un rotor comportant au moins une pale de rotor, les deux rotors tournant en sens inverse.

11. Éolienne (10) selon l'une des revendications précédentes, **caractérisée par** deux unités de conversion de puissance (50) comportant respectivement un rotor comportant au moins une pale de rotor, les pales de rotor étant déphasées l'une par rapport à l'autre lors du fonctionnement.

12. Éolienne (10) selon l'une des revendications précédentes, **caractérisée par** deux unités de conversion de puissance (50) comportant respectivement un rotor comportant au moins une pale de rotor, les pales de rotor étant orientées de manière identique dans la position d'arrêt.
